# EUROPEAN PATENT APPLICATION

(11) **EP 2 354 824 A1**
(43) Date of publication of application: **10.08.2011**
(21) Application number: 10000923.2
(22) Date of filing: 29.01.2010
(51) Int. Cl.: G02B 6/38

(54) **Hybrid connector**

(71) Applicant: CCS Technology Inc., Wilmington, DE 19803 (US)
(72) Inventor: Tenderenda, Tadeusz, 02-796 Warszawa (PL); Ciechomski, Tomasz, 99-400 Lowicz (PL); Plonczynska, Maria, 99-355 Lodz (PL)
(74) Representative: Sturm, Christoph

(57) **Abstract**

A connector for simultaneously connecting optical fibers and copper conductors, comprising a receptable connector part (11) and a plug connector part (12), the plug connector part (12) fitting into the receptable connector part (11) during mating said plug connector part (12) and said receptable connector part (11); wherein said receptable connector part (11) comprises a receptable housing (16) accommodating first electrical contacts (17), a first fiber optic ferrule (18), a first ferrule holding member (19) for the first ferrule (18), a first spring element (20) acting against said first ferrule holding member (19) and being held by a first spring push element (21); wherein said plug connector part (12) comprises a plug housing (22) accommodating second electrical contacts (23), a second fiber optic ferrule (24), a second ferrule holding member (25) for the second ferrule (24) and a second spring element (26) acting against the second ferrule holding member (25) and being held by a second spring push element (27); and wherein said receptable housing (16) and said plug housing (22) each being designed as a one piece housing. (Figure 4)

## Description

The invention relates to a hybrid connector for simultaneously connecting optical fibers and copper conductors. Further on, the invention relates to an assembly comprising a hybrid cable and a receptable connector part or a plug connector part of such a hybrid connector being attached to the hybrid cable.

There are known applications in which not only optical fibers but also copper conductors need to be connected to one another by way of a connector. An application in which both optical fibers and copper conductors have to be connected is, for example, known as "Radio over Fiber" (RoF) with distributed antenna systems.

In the case of the so-called "radio over fiber" application, a broadband radio signal is transmitted over the optical fibers to antenna units, which convert the optical signal into an RF signal. For the purpose of supplying power to the antenna units not only optical fibers, which serve for the transmission of the optical broadband radio signal, but also copper conductors, which ultimately serve for supplying power to the antenna units, need to be connected.

In practice, when both optical fibers and copper conductors have to be connected to one another in such an application, separate connectors are used for connecting the optical fibers and for connecting the copper conductors. Handling the cables and the connectors then presents difficulties in particular when the cables are laid in cable ducts of narrow dimensions. Further on, hybrid connectors for simultaneously connecting optical fibers and copper conductors are known from practice. However, hybrid connectors known from practice have a complex design and require a large space for housing the copper and fiber connections.

Against this background, a novel hybrid connector is provided. The novel hybrid connector for simultaneously connecting optical fibers and copper conductors comprises a receptable connector part and a plug connector part, the plug connector part fitting into the receptable connector part during mating said plug connector part and said receptable connector part; wherein said receptable connector part comprises a receptable housing accommodating first electrical contacts, a first fiber optic ferrule, a first ferrule holding member for the first ferrule, a first spring element acting against said first ferrule holding member and being held by a first spring push element; wherein said plug connector part comprises a plug housing accommodating second electrical contacts, a second fiber optic ferrule, a second ferrule holding member for the second ferrule and a second spring element acting against the second ferrule holding member and being held by a second spring push element; and wherein said receptable housing and said plug housing each being designed as a one piece housing.

The novel hybrid connector comprising the one piece receptable housing and the one piece plug housing has a reduced number of parts which allows to reduce the complexity of the hybrid connector design.

According to a preferred embodiment of the novel hybrid connector, the electrical contacts accommodated by said receptable housing and said plug housing are each positioned along a first axis or plane, wherein ends of optical fibers held by said fiber optic ferrules accommodated by said receptable housing and said plug housing are each positioned along a second axis or plane, and wherein said first axis or planes each runs perpendicular to the respective second axis or plane. This allows to reduce the space needed for accommodating the copper and fiber connections.

The hybrid connector can be used for terminating hybrid cables with example given up to twelve optic fibers and two copper conductors. Furthermore the hybrid connector can be used for terminating two separate cables, one with example given up to twelve optic fibers and the other one with two copper conductors. It should be noted the hybrid connector can also be used to terminate cables having a different number of optic fibers.

Further on, a novel assembly comprising a hybrid cable and a receptable connector part or a plug connector part of a hybrid connector being attached to the hybrid cable is provided, wherein said hybrid cable comprises a cable jacket surrounding first strength members, copper conductors, and optical fibers being surrounded by second strength members and a tube; wherein said receptable connector part or a plug connector part comprises a crimp body for attaching said hydrid cable to the receptable connector part or plug connector part; wherein said second strength members are crimped to said crimp body of the receptable connector part or plug connector part using an inner crimp band; and wherein said first strength members are crimped to said crimp body of the receptable connector part or plug connector part using an outer crimp band surrounding partly said inner crimp band. This provides for an easy and secure attachment of a hybrid cable to a receptable connector part or a plug connector part of a hybrid connector.

According to a preferred embodiment of the novel assembly, the inner crimp band comprises two sections, namely a front section having a larger diameter and a rear section having a smaller diameter; wherein said front section surrounds at least partly said crimp body and said second strength members being crimped between said crimp body and said front section; wherein said rear section surrounds partly said fiber tube; wherein said outer crimp band surrounds at least partly said front section of said inner crimp band and said first strength members being crimped between said crimp body, namely said front section of said inner crimp band, and said outer crimp band; and wherein an inner heat shrink element surrounds partly said tube and said rear section of said inner crimp band.

Preferably, an outer heat shrink element surrounds partly said cable jacket and said inner heat shrink element and said outer crimp band.

Preferred developments of the invention are provided by the dependent claims and the description which follows. Exemplary embodiments are explained in more detail on the basis of the drawing, in which:
- Figure 1: shows a side view of a hybrid connector according to the invention;
- Figure 2: shows a first cross section through the connector of Figure 1 along a fiber termination plane;
- Figure 3: shows a second cross section through the connector of Figure 1 along a copper termination plane;
- Figure 4: shows the connector of Figure 1 in an exploded representation;
- Figure 5: shows a perspective view of a receptable connector part of the connector of Figure 1;
- Figures 6a, 6b: show different perspective views of a receptable housing of the receptable connector part of Figure 5;
- Figure 7: shows a perspective view of a plug connector part of the connector of Figure 1 together with a coupling nut;
- Figures 8a, 8b: show different perspective views of a plug housing of the plug connector part of Figure 7;

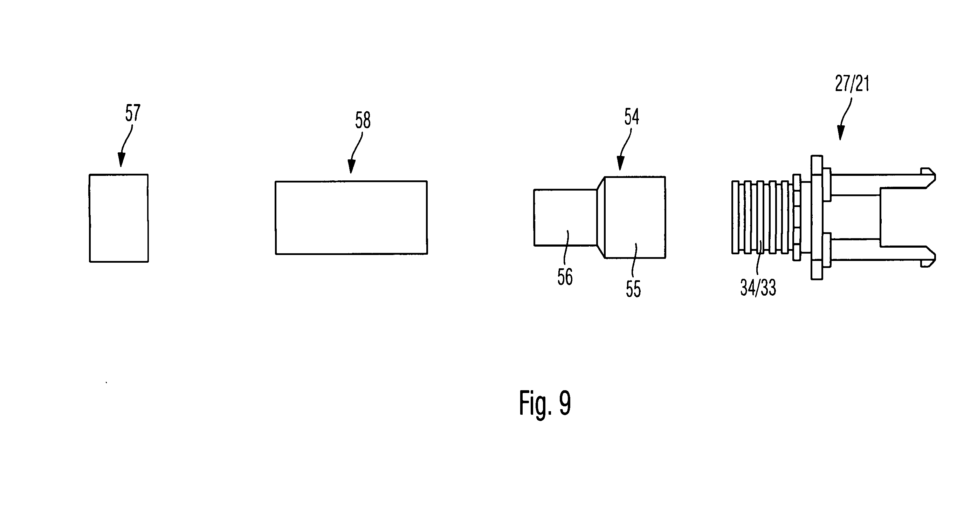

- Figure 9: shows elements needed to provide an assembly comprising a hybrid cable and a receptable connector part or a plug connector part of a hybrid connector;
- Figure 10: shows the elements of Figure 9 in an assembled manner;
- Figure 11: shows a cross section through an assembly comprising a hybrid cable and a spring push element of a receptable connector part or a plug connector part of a hybrid connector.
- Figure 12a, 12b: show perspective views of an alternative receptable housing and an alternative plug housing; and
- Figure 13a, 13b: show perspective views of a further alternative receptable housing and a further alternative plug housing.

The application relates to a hybrid connector for simultaneously connecting optical fibers and copper conductors. Further on, the application relates to an assembly comprising a hybrid cable and a receptable connector part or a plug connector part of a hybrid connector.

A hybrid connector 10 comprises a receptable connector part 11 and a plug connector part 12. The receptable connector part 11 is often called female connector part and the plug connector part 12 is often called male connector part.

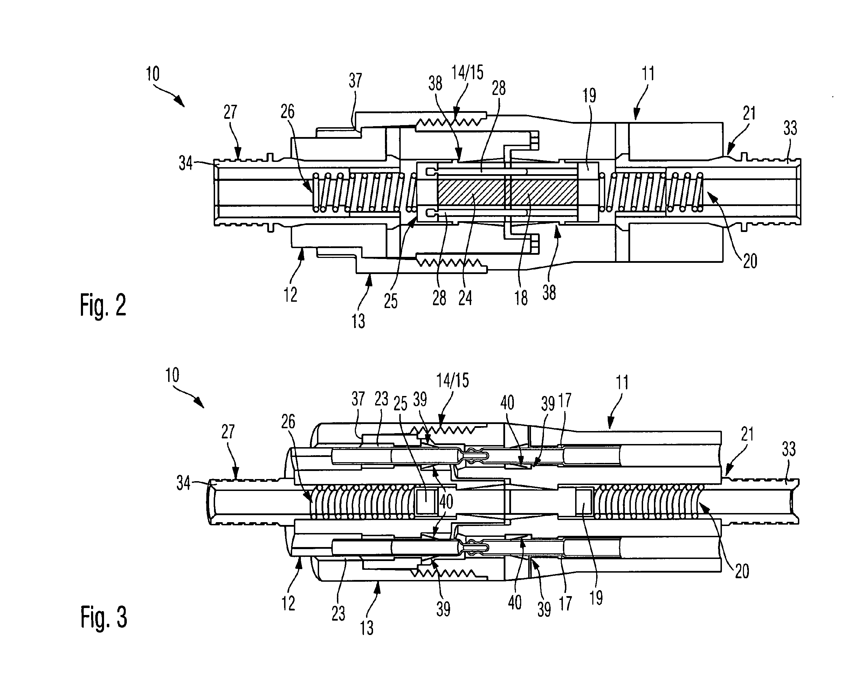

The plug connector part 12 fits into the receptable connector part 11 during mating said plug connector part 12 and said receptable connector part 11. The receptable connector part 11 and the plug connector part 12 of the hybrid connector are held together in their mated position by a coupling nut 13, said coupling nut 13 having an inside screw thread 14 (see for example Figures 2, 3, 7) acting together with an outside screw thread 15 (see for example Figures 2, 3, 5) of said connector part 11.

The receptable connector part 11 of the hybrid connector 10 comprises a receptable housing 16 accommodating first electrical contacts 17, a first fiber optic ferrule 18, a first ferrule holding member 19 for the first ferrule 18, a first spring element 20 acting against said first ferrule holding member 18 and being held by a first spring push element 21.

The plug connector part 12 comprises a plug housing 22 accommodating second electrical contacts 23, a second fiber optic ferrule 24, a second ferrule holding member 25 for the second ferrule 24 and a second spring element 26 acting against the second ferrule holding member 25 and being held by a second spring push element 27.

The first electrical contacts 17 are according to the shown embodiment designed as contact sockets and the second electrical contacts 23 are designed as contact pins.

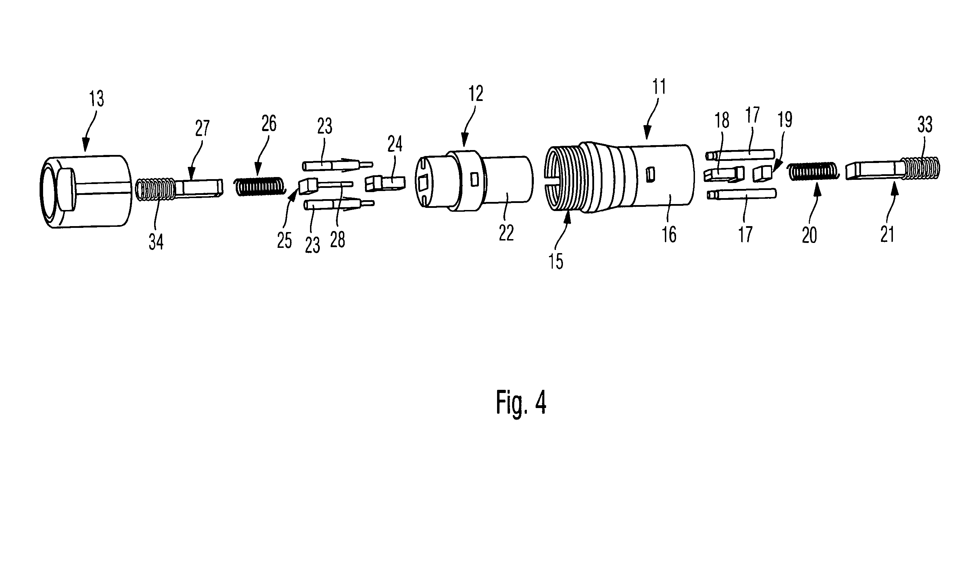

The second ferrule holding member 25 accommodated by the plug connector part 12 comprises according to the shown embodiment guide pins 28 (see for example Figures 2, 4) running completely through openings 29 of the second fiber optic ferrule 24 and entering into openings 30 of the first fiber optic ferrule 18 when the plug connector part 12 and the receptable connector part 11 are mated.

Free ends of the ferrules 18, 24 are pressed together by the spring elements 20, 26 when the plug connector part 12 and the receptable connector part 11 are mated or fitted together.

The ferrules 18, 24, the ferrule holding members 19, 25 and the spring elements 20, 26 of each connector part 11, 12 are accommodated in passageways 31, 32, respectively, which are provided in a central section of the connector part housings 16, 22 of the two connector parts 11, 12.

The ferrules 18, 24, the ferrule holding members 19, 25 and the spring elements 20, 26 being fixed in the passageways 31, 32 in each case by way the respective spring push element 21, 27.

The connector part housings 16, 22 have protrusions 38 in the region of the passageways 31, 32 acting as stop members and positioning elements for the ferrules 18, 24.

Each spring push element 21, 27 has a rear portion providing a crimp body 33, 34 for attaching at least on cable to the respective receptable connector part 11 or plug connector part 12.

The electrical contacts 17, 23 are accommodated in passageways 35, 36 of the connector part housings 16, 22, respectively, of the two connector parts 11, 12, which are positioned laterally alongside the passageways 31, 32, which serve for accommodating the ferrules 18, 24.

The connector part housings 16, 22 have undercuts 39 in the region of the passageways 31, 32 acting as stop members and positioning elements for barb-like anchoring elements 40 assigned to the electrical contacts 17, 32.

The receptable housing 16 of said receptable connector part 11 and said plug housing 22 of said plug connector part 12 are both designed as a one piece housings. This provides for a reduced number of parts which allows to reduce the complexity of the hybrid connector design.

As mentioned above, the receptable connector part 11 and the plug connector part 12 of the connector 10 are held together in their mated position by the coupling nut 13. The coupling nut 13 is at least partly surrounding the plug housing 22 of said plug connector part 12 when the receptable connector part 11 and the plug connector part 12 are held together in their mated position by the coupling nut 13. The plug housing 22 has a round step cut portion 37 acting as stop member for said coupling nut 13.

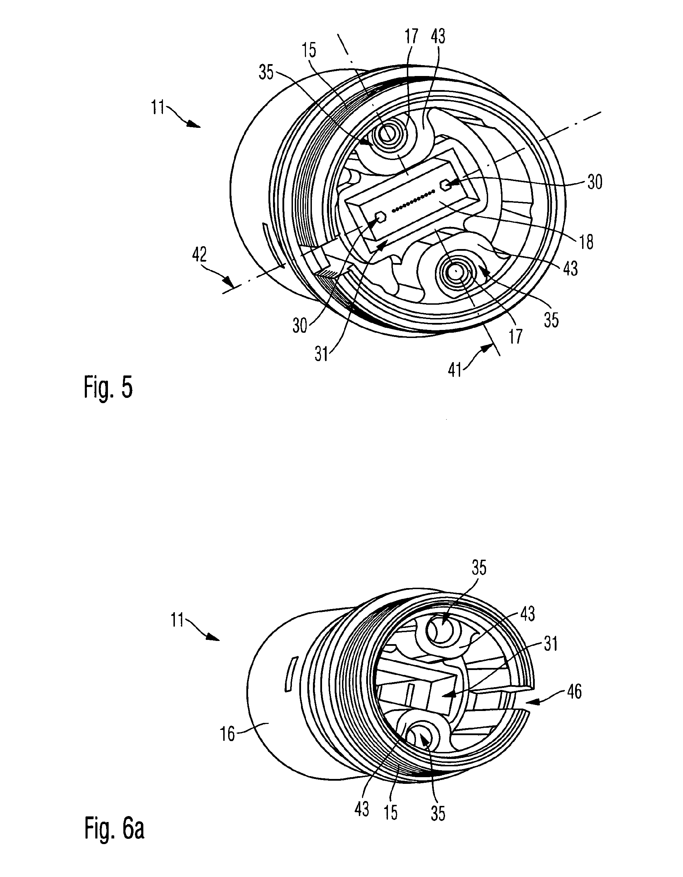

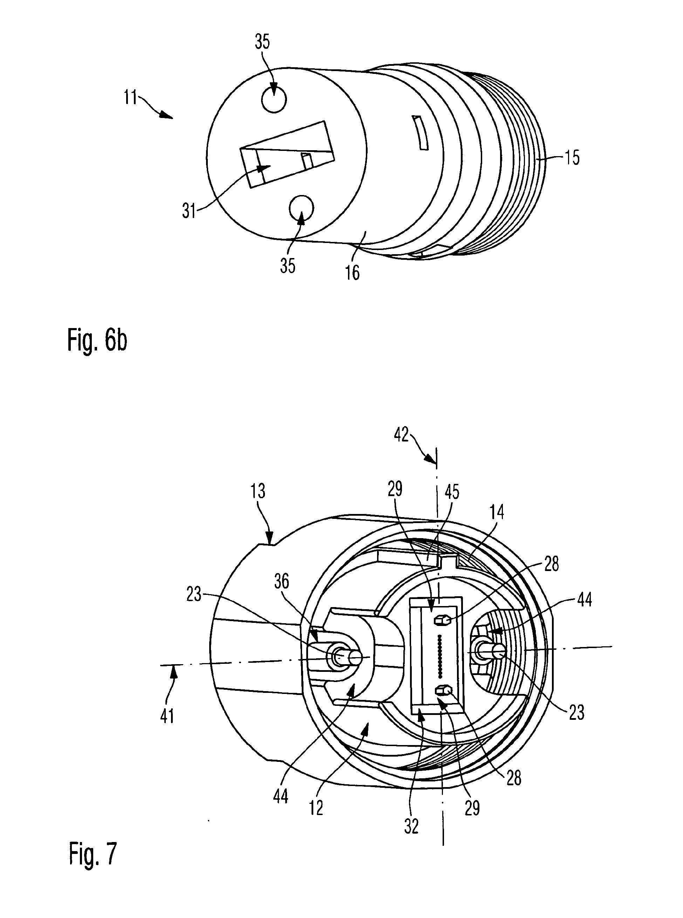

The electrical contacts 17 accommodated by said receptable housing 16 as well as the electrical contacts 23 accommodated by said said plug housing 22 are each positioned along a first axis 41 or plane (see for example Figures 5, 7). Ends of optical fibers held and terminated by said fiber optic ferrule 18 accommodated by said receptable housing 16 as well as ends of optical fibers held and terminated by said fiber optic ferrule 24 accommodated by said plug housing 22 are each positioned along a second axis 42 or plane (see for example Figures 5, 7). These axis 41, 42 or planes are running perpendicular to each other. This allows to reduce the space needed for accommodating the copper and fiber connections. The ferrules 18, 24 are a multi fiber ferrules terminating each up to twelve optical fibers. The receptable housing 16 of said receptable connector part 11 of the hybrid connector 10 and the plug housing 22 of the plug connector part 12 of the hybrid connector 10 comprise keying members.

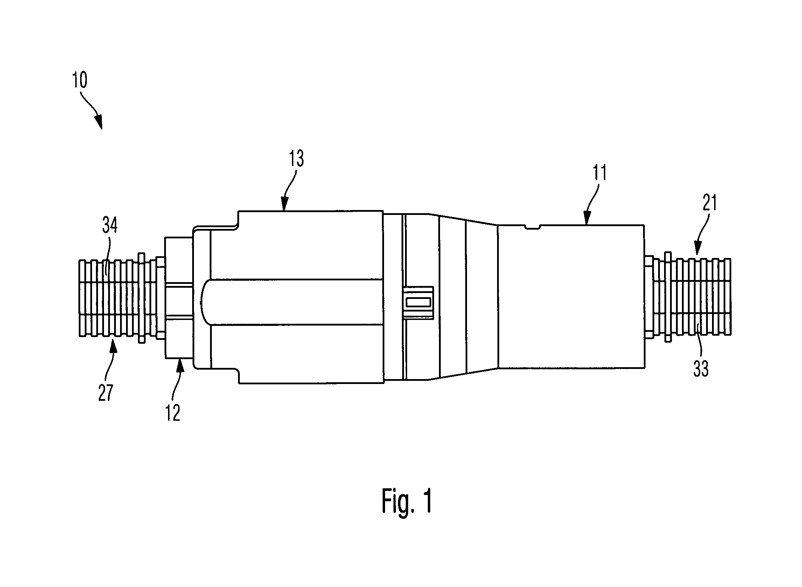

These keying members are, according to the embodiment of Figures 1 to 8b, provided by protrusions 43 surrounding the electrical contacts 17 accommodated by said receptable housing 16 and by recesses 44 surrounding the electrical contacts 23 accommodated by said plug housing 22, whereby the outer shape of said protrusions 43 corresponds to the inner shape of said recesses 44. As shown in the embodiment of Figures 1 to 8b, said protrusions 43 and recesses 44 are shaped symmetrically in a way that all protrusions 43 and all recesses 44 providing first and second keying members have identical shapes. At one circumferential position of said receptable housing 16 there is positioned another recess 46 and at one circumferential position of said plug housing 22 there is positioned another protrusion 45 providing together a third keying member.

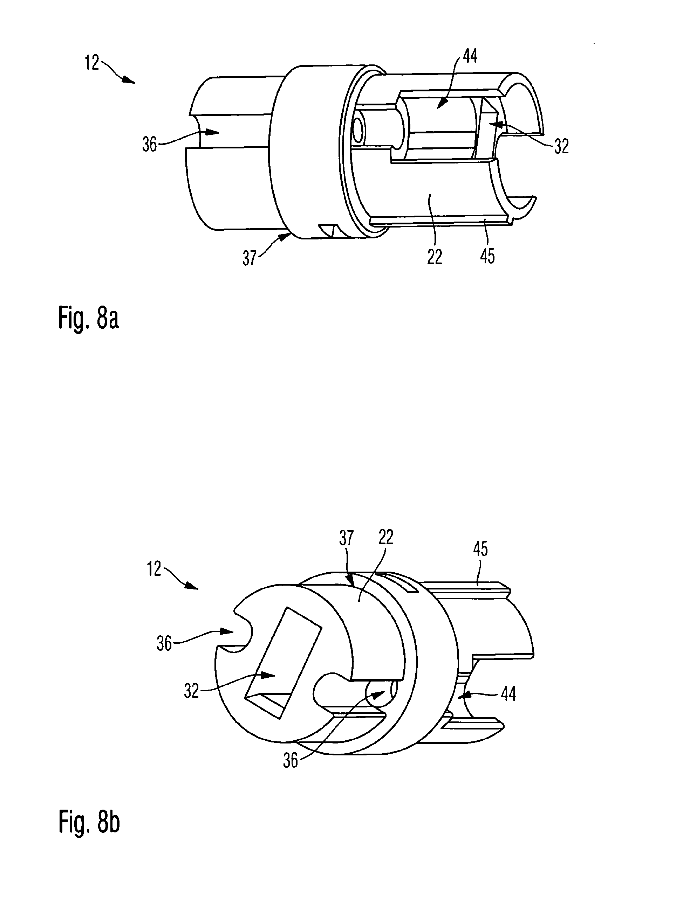

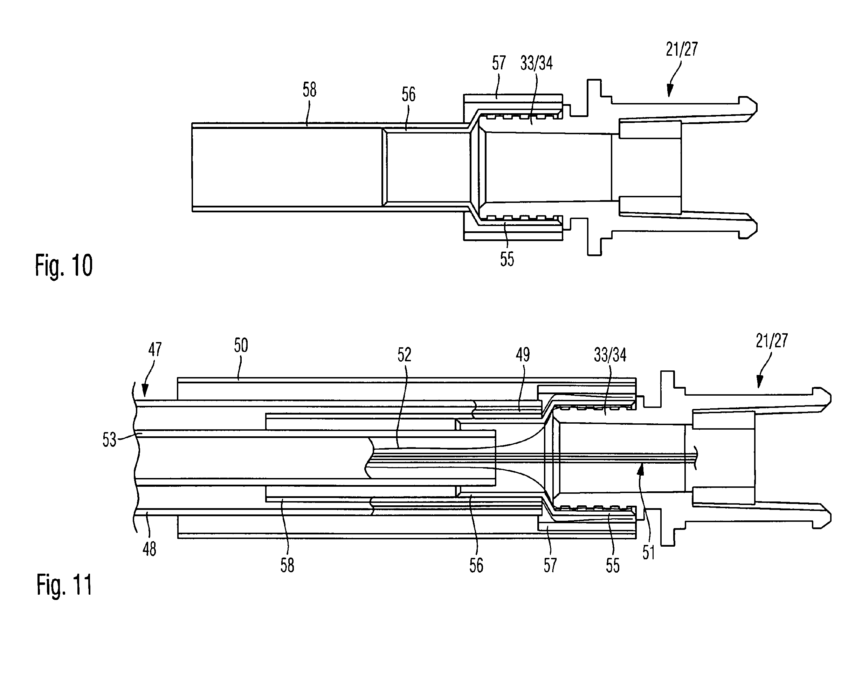

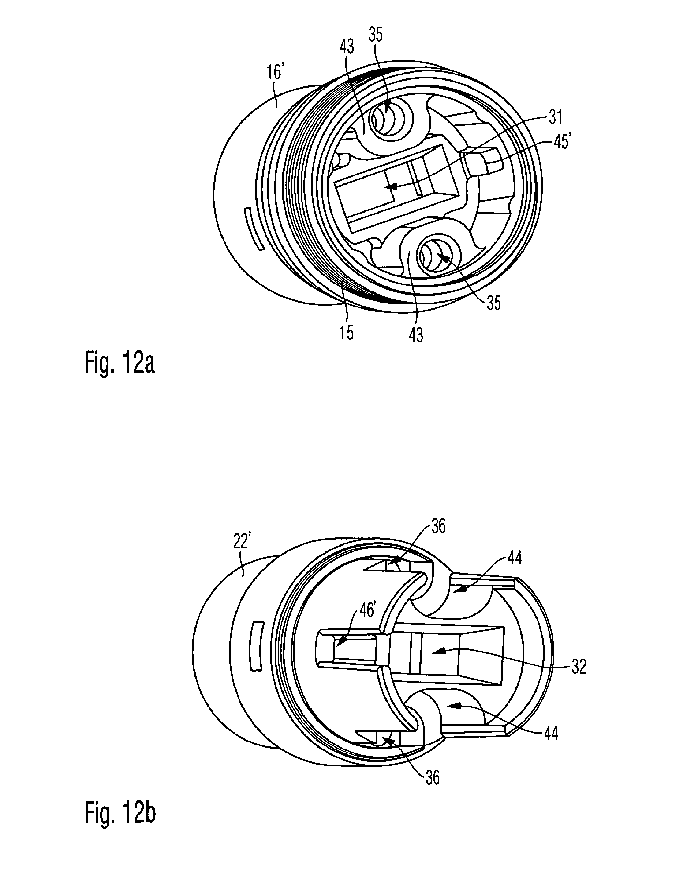

As shown in Figures 12a, 12b, illustrating perspective views of an alternative receptable housing 16' and an alternative plug housing 22', at one circumferential position of said receptable housing 16' there is positioned another protrusion 45' and at one circumferential position of said plug housing 22' there is positioned another recess 46' providing together the third keying member. With respect to the other features the receptable housing 16' and an alternative plug housing 22' shown in Figures 11 a, 11 b correspond to the receptable housing 16 and an plug housing 22 shown in Figures 6a, 6b, 8a, 8b.

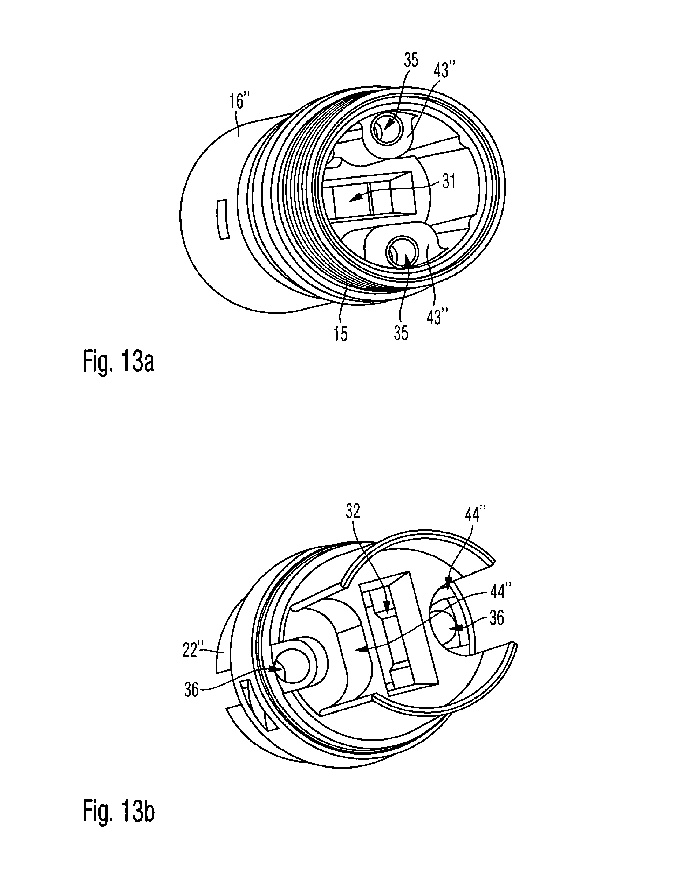

As shown in Figures 13a, 13b, illustrating perspective views of another alternative receptable housing 16" and an alternative plug housing 22", the protrusions 43" and recesses 44" surrounding the electrical contacts 17, 23 are shaped asymmetrically in a way that a first protrusion 43" and a first recess 44" providing together a first keying member have different shapes than a second protrusion 43" and a second recess 44" providing together a second keying member.

With this design it is possible to remove the recess 46 and the protrusion 45 providing in the other embodiments together the third keying member

The hybrid connector 10 can be used for terminating hybrid cables with example given up to twelve optic fibers and two copper conductors. Furthermore it can be used for terminating two separate cables, one with example given up to twelve optic fibers and the other one with two copper conductors.

Further on, a novel assembly comprising a hybrid cable 47 and a receptable connector part 11 or a plug connector part 13 of a hybrid connector 10 being attached to the hybrid cable is provided. Such a hybrid cable 47 comprising an outer cable jacket 48 surrounding first strength members 49, copper conductors (not shown), and optical fibers 51 being surround by second strength members 52 and a tube 53.

As mentioned above a receptable connector part 11 or a plug connector part 12 comprises a crimp body 33, 34 provided by the respective spring push element 21, 27, whereby the hybrid cable 37 can be attached to the crimp body 33, 34 of the respective connector part 11, 12.

The second strength members 52 are crimped to said crimp body 33, 34 of the receptable connector part 11 or plug connector part 12 using an inner crimp band 54. Said inner crimp band 54 comprises two sections, namely a front section 55 having a larger diameter and a rear section 56 having a smaller diameter.

Said front section 55 of said inner crimp band 54 surrounds at least partly said crimp body 33, 34 and said second strength members 52 being crimped to said crimp body 33, 34, namely between said crimp body 33, 34 and said front section 55 of said inner crimp band 54. Said rear section 56 of said inner crimp band 54 surrounds partly said fiber tube 53.

The first strength members 49 are crimped to said crimp body 33, 34 of the receptable connector part 11 or plug connector part 12 using an outer crimp band 57 surrounding partly said inner crimp band 54, namely said front section 55 of said inner crimp band 54, and said first strength members 49 being crimped to said crimp body 33, 34, namely between said outer crimp band 57 and said front section 55 of said inner crimp band 54.

An inner heat shrink element 58 surrounds partly said tube 53 and said rear section 56 of said inner crimp band 54. An outer heat shrink element 50 surrounds partly said cable jacket 48 and said inner heat shrink element 58 and said outer crimp band 57.

An additional third heat shrink (not shown) can be used in the assembly to secure the cable connector junction. It can be used either instead or with the connector boot on top of it. The third heat shrink can be also a heat shrinkable boot.

As mentioned above, it is possible to terminate a first hybrid cable to the receptable connector part 11 and a second hybrid cable to the plug connector part 13. It is also possible to terminate two separate cables, one with optic fibers and the other one with copper conductors, to the receptable connector part 11 and to the plug connector part 13 of a hybrid connector 10. In each case, two assemblies are provided, a first assembly comprising at least one cable, preferably the first hybrid cable, and the receptable connector part 11 and a second assembly comprising at least one cable, preferably the second hybrid cable, and the plug connector part 13.

### List of reference signs

- 10: connector
- 11: receptable connector part
- 12: plug connector part
- 13: coupling nut
- 14: inside screw thread
- 15: outside screw thread
- 16, 16', 16": receptable housing
- 17: first electrical contact
- 18: first fiber optic ferrule
- 19: first ferrule holding member
- 20: first spring element
- 21: first spring push element
- 22, 22', 22": plug housing
- 23: second electrical contact
- 24: second fiber optic ferrule
- 25: second ferrule holding member
- 26: second spring element
- 27: second spring push element
- 28: guide pin
- 29: opening
- 30: opening
- 31: passageways
- 32: passageways
- 33: crimp body
- 34: crimp body
- 35: passageway
- 36: passageway
- 37: portion
- 38: protrusion
- 39: undercut
- 40: barb-like anchoring elements
- 41: axis
- 42: axis
- 43, 43', 43": protrusion
- 44, 44', 44": recess
- 45, 45': protrusion
- 46, 46': recess
- 47: hybrid cable
- 48: outer cable jacket
- 49: first strength member
- 50: outer heat shrink element
- 51: optical fiber
- 52: second strength member
- 53: tube
- 54: inner crimp band
- 55: front section
- 56: rear section
- 57: outer crimp band
- 58: inner heat shrink element

## Claims

1. A connector for simultaneously connecting optical fibers and copper conductors, comprising a receptable connector part (11) and a plug connector part (12), the plug connector part (12) fitting into the receptable connector part (11) during mating said plug connector part (12) and said receptable connector part (11);
said receptable connector part (11) comprising a receptable housing (16, 16', 16") accommodating first electrical contacts (17), a first fiber optic ferrule (18), a first ferrule holding member (19) for the first ferrule (18), a first spring element (20) acting against said first ferrule holding member (19) and being held by a first spring push element (21);
said plug connector part (12) comprising a plug housing (22, 22', 22") accommodating second electrical contacts (23), a second fiber optic ferrule (24), a second ferrule holding member (25) for the second ferrule (24) and a second spring element (26) acting against the second ferrule holding member (25) and being held by a second spring push element (27);
wherein said receptable housing (16, 16', 16") and said plug housing (22, 22', 22") each being designed as a one piece housing.

2. The connector as claimed in claim 1, wherein said receptable connector part (11) and said plug connector part (12) are held together in their mated position by a coupling nut (13), said coupling nut (13) having an inside screw thread (14) acting together with an outside screw thread (15) of said receptable housing (16, 16', 16").

3. The connector as claimed in claim 2, wherein said coupling nut (13) is at least partly surrounding said plug housing (22, 22', 22") when the receptable connector part (11) and said plug connector part (12) are held together in their mated position by said coupling nut (13), said plug housing (22, 22', 22") having a portion (37) acting as stop member for said coupling nut (13).

4. The connector as claimed in one of claims 1 to 3, wherein said receptable housing (16, 16', 16") and said plug housing (22, 22', 22") comprise keying members, namely protrusions (43, 43', 43") surrounding the electrical contacts accommodated by said receptable housing or said plug housing and recesses (44, 44', 44") surrounding the electrical contacts accommodated by said plug housing or said receptable housing, whereby the outer shape of said protrusions corresponds to the inner shape of said recesses.

5. The connector as claimed in claim 4, wherein said protrusions (43") and recesses (44") are shaped asymmetrically in a way that a first protrusion and a first recess providing a first keying member have different shapes than a second protrusion and a second recess providing a second keying member.

6. The connector as claimed in claim 4, wherein said protrusions (43, 43') and recesses (43, 43') are shaped symmetrically in a way that all protrusions and all recesses providing first and second keying members have identical shapes, and wherein at one circumferential position of said receptable housing (16, 16') and said plug housing (22, 22') there is positioned another protrusion (45, 45') or another recess (46, 46') providing a third keying member.

7. The connector as claimed in one of claims 1 to 6, wherein the electrical contacts accommodated by said receptable housing (16, 16', 16") and said plug (22, 22', 22") housing are each positioned along a first axis (41) or plane, wherein ends of optical fibers held by said fiber optic ferrules (18, 24) accommodated by said receptable housing (16, 16', 16") and said plug housing (22, 22', 22") are each positioned along a second axis (42) or plane, and wherein said first axis (41) or planes each runs perpendicular to the respective second axis (42) or plane.

8. The connector as claimed in one of claims 1 to 7, wherein each of said fiber optic ferrules (18, 24) is a multi fiber ferrule terminating up to twelve optical fibers.

9. The connector as claimed in one of claims 1 to 8, wherein said first spring push element (21) and said second spring push element (27) each having a rear portion providing a crimp body (33, 34) for attaching at least on cable to the respective receptable connector part (11) or plug connector part (12).

10. The connector as claimed in one of claims 1 to 9, wherein at least one cable, preferably a hybrid cable, is terminated to said receptable connector part (11) and to said plug connector part (12) thereby forming two assemblies, a first assembly comprising at least one cable, preferably a first hybrid cable, and the receptable connector part (11) and a second assembly comprising at least one cable, preferably a second hybrid cable, and the plug connector part (13).

11. Assembly comprising a hybrid cable (47) and a receptable connector part (11) or a plug connector part (12) of a hybrid connector being attached to the hybrid cable (47);
said hybrid cable (47) comprising a cable jacket (48) surrounding first strength members (49), copper conductors, and optical fibers (51) being surround by second strength members (52) and a tube (53);
said receptable connector part (11) or a plug connector part (12) comprising a crimp body (33, 34) for attaching said hydrid cable (47) to the receptable connector part (11) or plug connector part (12);
wherein said second strength members (52) are crimped to said crimp body (33, 34) of the receptable connector part (11) or plug connector part (12) using an inner crimp band (54); and
wherein said first strength members (49) are crimped to said crimp body of the receptable connector part or plug connector part using an outer crimp band (57) surrounding partly said inner crimp band (54).

12. The assembly of claim 11, wherein said inner crimp band (54) comprises a front section (55) having a larger diameter and a rear section (56) having a smaller diameter, wherein said front section (55) surrounds at least partly said crimp body and said second strength members being crimped to said crimp body, wherein said rear section (56) surrounds partly said fiber tube, and wherein said outer crimp band (57) surrounds at least partly said front section (55) of said inner crimp band (54) and said first strength members being crimped to said crimp body.

13. The assembly of claim 12, wherein an inner heat shrink element (58) surrounds partly said tube and said rear section (56) of said inner crimp band (54).

14. The assembly as claimed in one of claims 13, wherein an outer heat shrink element (59) surrounds partly said cable jacket and said inner heat shrink element (58) and said outer crimp band (57).

15. The assembly as claimed in one of claims 11 to 14, wherein said receptable connector part (11) or plug connector part (12) comprises features as claimed in one of claims 1 to 9.
